# EUROPÄISCHE PATENTANMELDUNG

(11) **EP 1 770 317 A2**
(43) Veröffentlichungstag der Anmeldung: **04.04.2007**
(21) Anmeldenummer: 06118485.9
(22) Anmeldetag: 04.08.2006
(51) Int. Cl.: F16L 21/02, F16L 1/11, F16L 58/18, F16L 57/00, F16L 21/03

(54) **Elastomeres Wurzelschutzprofil und Dichtungsanordnung zum Schutz von Rohrfügungen vor dem Eindringen von Wurzeln**

(30) Priorität: 05.08.2005 DE 102005037604; 05.08.2005 DE 102005037605
(71) Anmelder: DS Dichtungstechnik GmbH, 48301 Nottuln (DE)
(72) Erfinder: Grabe, Dr. Werner, 48259, Dülmen (DE); Steinhoff, Albert Dipl.-Ing., 48301 Nottuln (DE); Kloppenburg, Ingo Dipl.-Ing., 48301 Nottuln (DE)
(74) Vertreter: Tarvenkorn, Oliver

(57) **Zusammenfassung**

Elastomeres Wurzelschutzprofil (10) zum Schutz von Rohrfügungen mit Spitz- und Muffenende (1, 2) vor dem Eindringen von Wurzeln, mit einem Querschnittsprofil, das wenigstens einen Fugenspalt-Steckfuß (11) und einen damit verbundenen, äußeren Ableitungsbogen (12) umfasst, welcher zentral mit dem Fugenspalt-Steckfußes verbunden ist und beidseits davon überkragt.

## Beschreibung

Die Erfindung betrifft ein elastomeres Wurzelschutzprofil zum Schutz von Rohrfügungen vor dem Eindringen von Wurzeln.

Außerdem betrifft sie eine Dichtungsanordnung für eine Fügung eines Spitzendes eines ersten Rohrs und eines Muffenendes eines zweiten Rohrs, zwischen denen wenigstens ein elastomeres strangförmiges Hauptdichtungsprofil angeordnet ist.

Elastomere Dichtungsprofile nach gängigen europäischen Anforderungsnormen des Tiefbaus, z. B. gemäß der EN 681-1, erweisen sich als nicht wurzelfest, da sie auf eine anfängliche Wasserdruckdichtigkeit von 1 oder 2 bar ausgelegt sind und infolge von Spannungsrelaxationen von bis zu 50 % langfristig nicht den nötigen Gegendruck aufbringen können, um der Druckspannung der eindringenden Wurzelspitze, die rund 1,6 bar beträgt, zu widerstehen. Es hat sich in der Praxis gezeigt, dass die Maßgabe in den Normen, dass entweder eine Verpressung des Wurzelschutzprofils um 20 % oder ein Dichtigkeitsversuch unter Scherlast mit nur 0,5 bar oder auch bis zu 2 bar das Eindringen der Wurzel verhindert, nicht zutreffend ist. Um Wurzelschutzprofile auf eine höhere Anfangs-Wasserdruckdichtigkeit auszulegen, müsste ein härterer Werkstoff oder eine höhere Verpressung der Dichtung im Fugenspalt gewählt werden, wodurch sich solche Wurzelschutzprofile jedoch praktisch nicht mehr montieren lassen, da dann erhöhte Rückstellkräfte die Montage der Dichtung durch Einpressen in den Fugenspalt oder durch Zusammenstecken von konzentrischen Fertigbauteilen erschweren oder gar Fertigteile zerstört, indem zum Beispiel Muffen von Betonrohren brechen.

Bekannte Dichtungsprofile, die an der Oberfläche mit Herbiziden versehen sind, können das Grundwasser negativ beeinflussen. Weiterhin ist eine Langzeitwirkung entsprechend der veranschlagten Lebensdauer der Rohrleitung von über 50 und mehr Jahren zweifelhaft.

Wurzeln werden in ihrer Wuchsrichtung im Wesentlichen durch eine leichte Durchwurzelbarkeit des Bodens bestimmt. In der nahen Umgebung der Muffenfügung von Rohren ist eine Verdichtung des Bodens im Rohrgraben nur mangelhaft möglich, so dass Wurzeln, wenn sie, an der Rohrleitung entlang wachsend, auf die Muffe stoßen, zunächst häufig erst den Spaltringraum in Wachstumsspiralen füllen, bevor der Angriff der Wurzel direkt senkrecht auf das Dichtungsprofil startet.

Aufgabe der Erfindung ist es, eine sichere und dauerhafte Barriere gegen das Eindringen von Wurzeln in die Muffenfügung von Rohren anzugeben.

Erfindungsgemäß gelingt dies gemäß einer ersten Lösung der Erfindung durch ein Wurzelschutzprofil mit den Merkmalen des Anspruchs 1.

Das erfindungsgemäße Wurzelschutzprofil wird am Fugenspalteingang zwischen Rohrmuffe und Rohrspitzende in Wuchsrichtung der Wurzel vor das übliche elastomere Hauptdichtungsprofil eingesetzt. Durch die Anordnung einer äußeren Ableitung wird die angreifende Wurzelspitze um die Muffe und den Muffenspalt herumgeleitet. Die Ableitung transportiert die Wurzelspitze vom kleinen Spitzendurchmesser auf den größeren Muffendurchmesser. Durch die bogenförmige Ausbildung des ableitenden Elements an dem Wurzelschutzprofil wird eine angreifende Wurzelspitze immer seitlich abgelenkt und damit um die Muffe herumgeleitet wird.

Eine "zentrale" Anordnung des Ableitungsbogens am Fugenspalt-Steckfuß bedeutet nicht notwendigerweise eine exakt spiegelsymmetrische Ausbildung. Wesentlich ist nur, dass genügend lange überkragende Bereiche des Ableitungsbogens seitlich des Fugenspalts vorhanden sind, um ein Unterwandern durch Wurzelspitzen zu vermeiden.

Bei Fügungen mit einer Muffenglocke, die über den Außenumfang des Spitzendes übersteht, ist es vorteilhaft, wenn der Ableitungsbogen in etwa viertelkreisförmig und konkav ist. Damit liegt er im montierten Zustand der Rohrleitung mit seinen seitlichen, flügelartigen Überständen an der Muffenstirnseite einerseits und am Außenmantel des Spitzendes andererseits an. Die Überstände sind damit so lang, dass diese auch bei zulässigen Abwinklungen der Fügung noch mit Vorspannung anliegen. "Konkav" bezieht sich hierbei auf die Krümmung der frei nach außen zeigenden Oberfläche, deren Krümmungsmittelpunkt also außen liegt.

Bei Schachtringen und Rohren großer Durchmesser gibt es an der Fügung keine ausgeprägte Stufe am Außenumfang. Hier bietet sich ein konvexer Ableitbogen an mit einer nach außen weisende konvexen, also nach außen gewölbten Oberfläche an. Die Spitzen der über den Fugenspalt-Steckfuß überkragenden Flügelbereiche sind dabei in einer gestreckten Lage annähernd linear ausgerichtet, so dass sie sich an den jeweiligen Außenmantel von Muffen- und Spitzende im Bereich der Fügung anlegen können.

Bevorzugt ist der Fugenspalt-Steckfuß aus einem wasserquellfähigen Werkstoff hergestellt und mit dem Ableitungsbogen verklebt oder an diesen durch Coextrusion angeformt. Durch die Anordnung eines wasserquellfähigen Steckfußes wird dessen hohe Druckspannungsentwicklung bei Anwesenheit von Wasser und Feuchtigkeit den Muffenspalt verschließen und die eindringende Wurzelspitze zurückhalten.

Vorteilhaft ist es, wenn zumindest der Ableitungsbogen aus einem Elastomer mit einer Härte von 65 - 90 IRHD besteht. Mit größerer Härte des Ableitungsbogens wird infolge eines höheren Anpressdrucks die Gefahr der randseitigen Unterwanderung der Ableitung verringert.

Eine Fertigung durch Coextrusion erlaubt es, Werkstoffe unterschiedlicher Härte zu kombinieren, um so die Montage des Steckfußes zu erleichtern und gleichzeitig den nötigen harten Ableitungsbogen verwenden zu können.

Der Fugenspalt-Steckfuß und der Ableitungsbogen können aber auch aus demselben harten Werkstoff bestehen, wodurch eine einfache Herstellung durch Extrusion möglich ist.

Nicht nur bei den Wurzelschutzprofilen aus dem harten Werkstoff ist es vorteilhaft, dass der Fugenspalt-Steckfuß wenigstens einen Hohlkanal aufweist, der der leichteren Kompensation von Montagetoleranzen des Fugenspaltes dient.

Eine weitere Ausbildungsform sieht zur Kompensation von Montagetoleranzen vor, dass der Fugenspalt-Steckfuß tannenbaumartig mit Rippen profiliert ist.

Eine weitere Lösung der Aufgabe der Erfindung wird durch eine Dichtungsanordnung mit den Merkmalen des Anspruchs 16 angegeben.

Durch die Anordnung eines wasserquellfähigen Quellprofils in radialer Wirkungslinie des elastomeren Hauptdichtungsprofils wird dessen gegen Wurzeleindringen zu geringe eigene Anpressspannung bei Wasserzutritt erhöht und/oder dessen durch Spannungsrelaxation nachlassende Anpressspannung bei Wasserzutritt überkompensiert, so dass auch langfristig eine Anpressung des Dichtungssystems erzeugt wird, die der Angriffdruckspannung der Wurzel überlegen ist.

Eine getrennte Herstellung und Anordnung von wasserquellfähigem Dichtungsband und elastomerem Dichtungsprofil erlaubt es, beide Profile mit unterschiedlicher Vorspannung und zu unterschiedlichen Zeitpunkten zu montieren und beide Profile auf verschiedenen Seiten der Betonfertigteile anzuordnen, und jeweils zu entscheiden, ob das wurzelhemmende Element zur Verwendung kommen soll.

Die verbundene Herstellung bzw. Anordnung von wasserquellfähigem Dichtungsband und elastomerem Dichtungsprofil stellt sicher, dass das wurzelhemmende Quellprofil auch wirklich eingebaut wird.

Die Anordnung des wasserquellfähigen Dichtungsbandes auf der vom Fügespalt abgewandten Seite des Hauptdichtungsprofils stellt sicher, dass das Quellprofil bei der Montage ohne Beschädigung bleibt.

Eine weitere Möglichkeit besteht darin, das Quellprofil, an dem jeweils anderen Betonteil, also demjenigen Fügepartner, der das Hauptdichtungsprofil nicht trägt, in eine Nut oder einen Rezess oberflächenbündig oder mit Unterfüllung einzulassen. Das elastomere Quelldichtungsprofil nimmt dann bei der Montage der Betonfertigteile schließlich eine Position genau gegenüber dem Hauptdichtungsprofil ein.

Um das Aufquellen zu fördern, insbesondere wenn die Umgebung der Rohrfügung sehr trocken ist oder eine zusätzliche Abdichtung des äußeren Teils des Fügespalts vorgenommen worden ist, können Leitungskanäle vorgesehen sein oder eine Wasserleitung durch die Integration von Faservliesen, Geweben oder dergleichen in die Rohrwände bewirkt werden.

Das Wurzelschutzprofil gemäß der ersten Lösung der Erfindung kann zusätzlich zur Anordnung eines Quellprofils an dem Hauptdichtungsprofil vorgesehen sein.

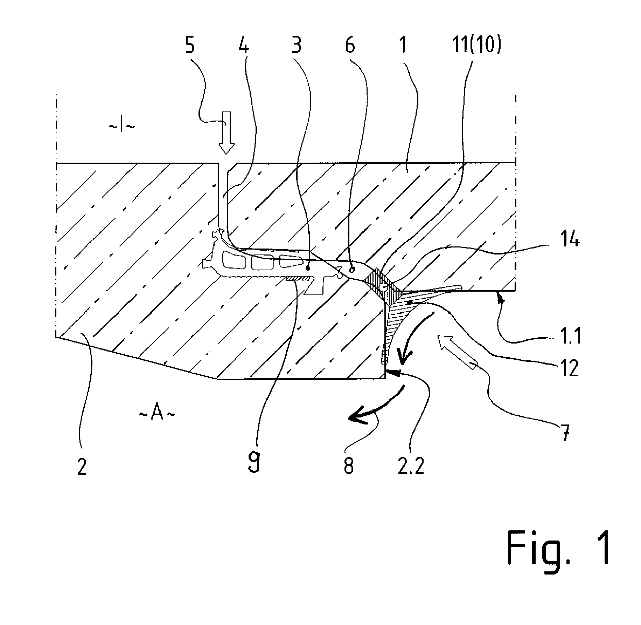

Die Erfindung wird nachfolgend anhand von Ausführungsbeispielen mit Bezug auf die Zeichnung näher erläutert. Die Figuren 1 bis 4 zeigen jeweils Detailausschnitte von Rohrfügungen in Schnittdarstellung.

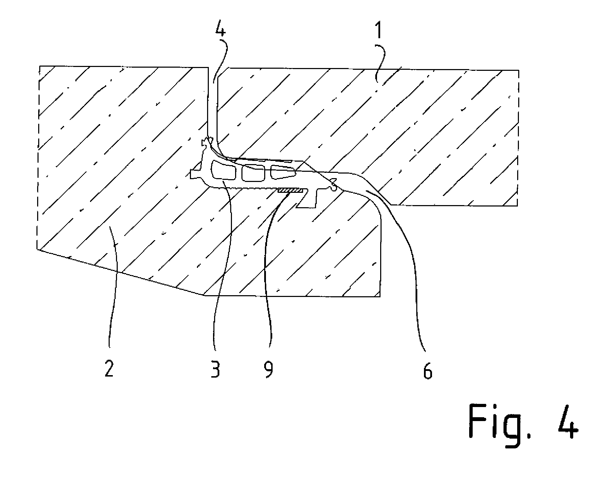

Fig. 1 zeigt einen Querschnitt durch eine erste Rohrfügung mit einem Spitzende 1 und einem Muffenende 2, wobei die Muffe glockenförmig erweitert ist, so dass zwischen einem Außenmantel 1.1 des Spitzendes 1 und einer Stirnseite 2.2 des Muffenendes 2 ein Winkel von etwa 90° eingeschlossen wird. Zwischen Spitz- und Muffenende 1, 2 ist ein Spalt 4 vorhanden. Zur Abdichtung des Ringspalts 4 gegenüber von der Innenseite I in Richtung des Pfeils 5 eindringenden Abwassers ist ein an sich bekanntes Hauptdichtungsprofil 3 vorgesehen, der in die Muffe 2 integriert ist. In der Darstellung der Fig. 1 ist das Hauptdichtungsprofil 3 zur übersichtlicheren Darstellung nicht im komprimierten Zustand gezeigt. Am Hauptdichtungsprofil 3 kann ein zusätzliches Quellprofil 9 vorgesehen sein, das unter Bezug auf Figur 4 nachfolgend beschrieben ist.

Von der Außenseite A würde ein Angriff einer Wurzelspitze in den Spalt 6 in Richtung des Pfeils 7 erfolgen. Erfindungsgemäß ist in den Spalt 6 ein Wurzelschutzprofil 10 gemäß einem ersten Ausführungsbeispiel eingesetzt, der mit einem Fugenspalt-Steckfuß 11 im Spalt 6 verankert ist. Ein Hohlkanal 14 im Querschnitt des Fugenspalt-Steckfußes 11 ermöglicht eine Kompression des Steckfußes und damit eine Anpassung an unterschiedliche Weiten des Spaltes 6.

Mit dem Fugenspalt-Steckfuß 11 ist ein äußerer Ableitungsbogen 12 verbunden, der sich an der Außenseite der Rohrfügung vollständig vor die Mündung des Spaltes 6 legt. Die seitlich über den mittleren Bereich mit dem Steckfuß vorstehenden, flügelartigen Fortsätze liegen am Außenmantel 1.1 bzw. an der Stirnseite 2.2 von Spitz- bzw. Muffenende 1, 2 an.

Durch die erfindungsgemäß vorgesehene Bogenform erfolgt sunabhängig von der tatsächlichen Angriffsrichtung 7 eine seitliche Ablenkung eines Wurzelangriffs in Richtung des Pfeils 7. Die Ableitung der Wurzelspitze ist durch die Pfeile 8 angedeutet.

Der Wurzelschutzprofil 10 ist in Fig. 1 ebenfalls im unverformten Zustand dargestellt, so dass er gemäß der zeichnerischen Darstellung scheinbar in den Betonmantel von Sitz- und Muffenende 1, 2 hineinragt. Tatsächlich liegen die äußeren, flügelartigen Fortsätze flach am Außenmantel 1.1 bzw. an der Stirnseite 2.2 an.

Wie durch die unterschiedlichen Schraffuren am Wurzelschutzprofil 10 in Fig. 1 kenntlich gemacht, bestehen Steckfuß 11 und Ableitungsbogen 12 aus unterschiedlichen Werkstoffen, insbesondere aus Elastomeren unterschiedlicher Härte.

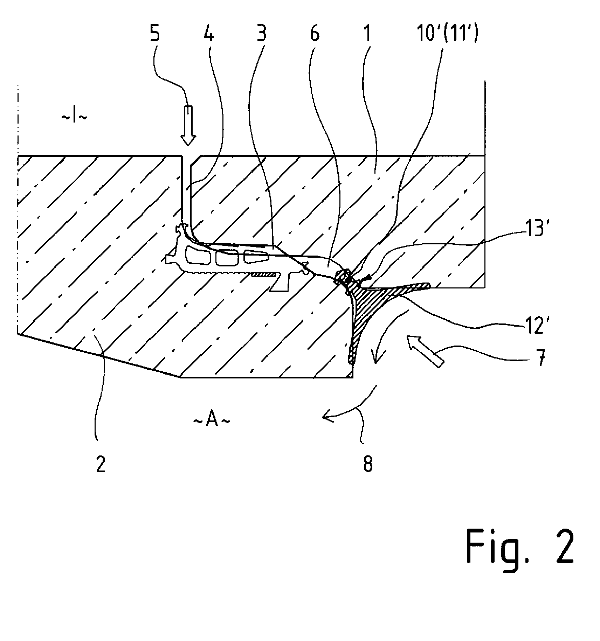

Fig. 2 zeigt die gleiche Fügung mit einem Spitzende 1 und einem Muffenende 2 wie in Fig. 1, bei der ein Wurzelschutzprofil 10' eingesetzt ist, das sich von dem ersten Ausführungsbeispiel gemäß Fig. 1 dadurch unterscheidet, dass ein Fugenspalt-Steckfuß 11' einstückig mit einem Ableitungsbogen 12' ausgebildet ist. Die Funktion des Wurzelschutzprofils 10' gegenüber einem Wurzelangriff in Richtung des Pfeils 7 ist unverändert gegenüber der ersten Ausführungsform und führt zur Ablenkung der Wurzelspitze in Richtung Nr. 8.

Der Steckfuß 11' weist eine tannenbaumartige Profilierung mit seitlich überstehenden Rippen 13' auf, um auf diese Weise das Einschieben in den Spalt 6 zu erleichtern und eine Anpassung an unterschiedliche Spaltweiten zu ermöglichen.

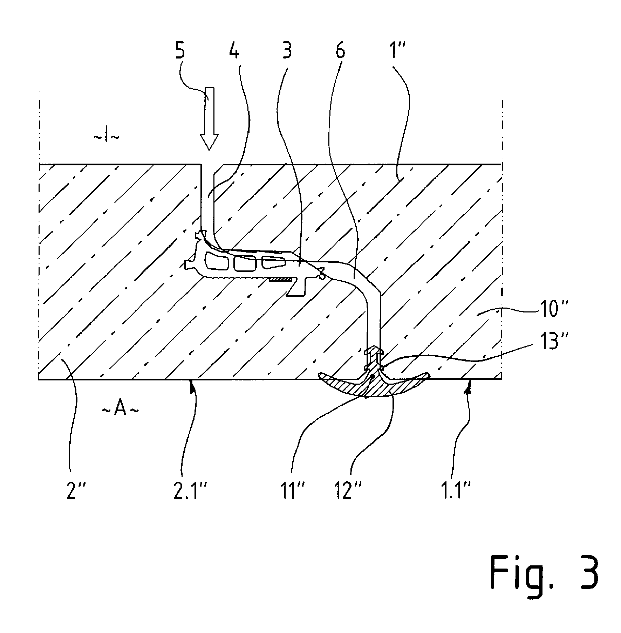

Fig. 3 zeigt eine Fügung von einem Spitzende 1" mit einem Muffenende 2", wobei hier die miteinander verbundenen Rohre eine solch große Wandstärke aufweisen, dass die Außenmäntel 1.1", 2.1" ohne Durchmessersprung ineinander übergehen. Ein Wurzelschutzprofil 10" ist eingesetzt, dessen Fugenspalt-Steckfuß 11" wiederum eine tannenbaumförmige Profilierung mit Rippen 13" besitzt.

Um einen Wurzelangriff bei dieser Fügung seitlich abzulenken, ist die nach außen gewandte Oberfläche eines Ableitungsbogens 12" des Wurzelschutzprofils 10" konvex ausgebildet; der Krümmungsmittelpunkt liegt auf der Seite der Rohrinnenseite. Die seitlichen Überstände am Ableitungsbogen 12" legen sich so an die Mantelflächen 1.1", 2.1" an.

Fig. 4 zeigt eine Fügung gemäß einer zweiten Ausführungsform der Erfindung, bei der nur der Fügespalt 4, 6 durch einen wiederum unkomprimiert dargestellten Hauptdichtring 3 abgedichtet ist. Ein Quellprofil 9 liegt direkt am Hauptdichtring 3 an, um diesen in radialer Richtung auf das Spitzende aufdrücken zu können und die Vorspannung im Spaltbereich 6 soweit zu erhöhen, dass ein Eindringen einer Wurzelspitze bis in den Spaltbereich 4 erschwert wird. Die Anordnung des Quellprofil 9 ist auf der vom Spitzende 1 abgewandten Seite des in die Muffe 2 integrierten Hauptdichtungsprofils 3 vorgesehen, wodurch vermieden wird, dass das Quellprofil 9 beim Einschieben des Spitzendes 1 verschoben oder beschädigt wird.

## Patentansprüche

1. Elastomeres Wurzelschutzprofil (10, 10', 10") zum Schutz von Rohrfügungen vor dem Eindringen von Wurzeln, mit einem Querschnitt, der wenigstens einen Fugenspalt-Steckfuß (11, 11', 11") und einen damit verbundenen, äußeren Ableitungsbogen (12, 12', 12") umfasst, welcher zentral mit dem Fugenspalt-Steckfußes verbunden ist und beidseits davon überkragt.

2. Wurzelschutzprofil (10, 10') nach Anspruch 1, **dadurch gekennzeichnet, dass** der Ableitungsbogen (12, 12') konkav ist.

3. Wurzelschutzprofil (10") nach Anspruch 1, **dadurch gekennzeichnet, dass** der Ableitungsbogen (12, 12") konvex ist.

4. Wurzelschutzprofil (10, 10', 10") nach einem der Ansprüche 1 bis 3, **dadurch gekennzeichnet, dass** der Ableitungsbogen (12, 12', 12") viertelkreisförmig ist.

5. Wurzelschutzprofil (10, 10', 10") nach einem der Ansprüche 1 bis 4, **dadurch gekennzeichnet, dass** der Fugenspalt-Steckfuß (11, 11', 11") aus einem wasserquellfähigen Werkstoff hergestellt ist und mit dem Ableitungsbogen (12, 12', 12") verklebt oder an diesen durch Coextrusion angeformt ist.

6. Wurzelschutzprofil (10, 10', 10") nach einem der Ansprüche 1 bis 5, **dadurch gekennzeichnet, dass** der Ableitungsbogen (12, 12', 12") aus einem Elastomer mit einer Härte von 65 - 90 IRHD besteht.

7. Wurzelschutzprofil (10, 10', 10") nach Anspruch 6, **dadurch gekennzeichnet, dass** der Fugenspalt-Steckfuß (11, 11', 11") und der Ableitungsbogen (12, 12', 12") aus demselben Werkstoff bestehen.

8. Wurzelschutzprofil (10) nach einem der Ansprüche 1 bis 7, **dadurch gekennzeichnet, dass** der Fugenspalt-Steckfuß (11) wenigstens einen Hohlkanal (14) aufweist.

9. Wurzelschutzprofil (10) nach einem der vorhergehenden Ansprüche, **dadurch gekennzeichnet, dass** der Fugenspalt-Steckfuß (11) aus einem wasserquellfähigen Werkstoff hergestellt und mit dem Ableitungsbogen (12) verbunden ist.

10. Wurzelschutzprofil (10', 10") nach einem der vorhergehenden Ansprüche, **dadurch gekennzeichnet, dass** der Fugenspalt-Steckfuß (11', 11") tannenbaumartig mit Rippen (13', 13") profiliert ist.

11. Dichtungsanordnung für eine Rohrverbindung eines Spitzendes (1, 1") eines ersten Rohrs und eines Muffenendes (2, 2") eines zweiten Rohrs, zwischen denen ein Fugenspalt (4, 6) ausgebildet ist, an dessen Mündung an der Mantel- und/oder Stirnfläche (1.1, 2.2; 1.1", 2.1" ein Wurzelschutzprofil (10', 10") nach einem der vorhergehenden Ansprüche 1 bis 11 angeordnet ist, der mit seinem Fugenspalt-Steckfuß (11, 11', 11") in den Fugenspalt (6) eingesetzt ist und mit seinem Ableitungsbogen (12, 12', 12") die Mündung des Fugenspaltes (6) überdeckt.

12. Dichtungsanordnung nach Anspruch 11, **dadurch gekennzeichnet, dass** ein Hauptdichtungsprofil (3) im Fugenspalt (4, 6) angeordnet ist und zwischen dem Hauptdichtungsprofil (3) und einem Mantel des Spitz- und/oder Muffenendes (1, 2) ein Quellprofil (9) vorgesehen ist.

13. Dichtungsanordnung nach Anspruch 12, **dadurch gekennzeichnet, dass** das Hauptdichtungsprofil (3) im Muffenende (2) verankert ist und das Quellprofil (9) zwischen dem Hauptdichtungsprofil (3) und einem Mantel des Muffenendes (1, 2) angeordnet ist.

14. Dichtungsanordnung nach Anspruch 12 oder 13, **dadurch gekennzeichnet, dass** aus dem Fugenspalt (4, 6) und/oder aus dem Inneren (I) der Rohrverbindung wenigstens ein flüssigkeitsleitender Kanal zu dem Quellprofil (9) führt.

15. Dichtungsanordnung nach Anspruch 12 oder 13, **dadurch gekennzeichnet, dass** aus dem Fugenspalt (4, 6) und/oder aus dem Inneren (I) der Rohrverbindung mittels wenigstens eines in das Muffenende eingebetteten, wasserleitenden Faservlieses oder Fasergewebes wenigstens eine Zuleitung zu dem Quellprofil (9) führt.

16. Dichtungsanordnung für eine Fügung eines Spitzendes (1) eines ersten Rohrs und eines Muffenendes (2) eines zweiten Rohrs, zwischen denen wenigstens ein elastomeres strangförmiges Hauptdichtungsprofil (3) angeordnet ist,
**dadurch gekennzeichnet, dass** in radialer Wirkungslinie des Hauptdichtungsprofils (3) ein wasserquellfähiges Quellprofil (9) angeordnet ist.

17. Dichtungsanordnung nach Anspruch 16, **dadurch gekennzeichnet, dass** ein Hauptdichtungsprofil (3) im Fugenspalt (4, 6) angeordnet ist und zwischen dem Hauptdichtungsprofil (3) und einem Mantel des Spitz- und/oder Muffenendes (1, 2) ein Quellprofil (9) vorgesehen ist.

18. Dichtungsanordnung nach Anspruch 17, **dadurch gekennzeichnet, dass** das Hauptdichtungsprofil (3) im Muffenende (2) verankert ist und das Quellprofil (9) zwischen dem Hauptdichtungsprofil (3) und einem Mantel des Muffenendes (1, 2) angeordnet ist.

19. Dichtungsanordnung nach Anspruch 16 oder 17, **dadurch gekennzeichnet, dass** aus dem Fugenspalt (4, 6) und/oder aus dem Inneren (I) der Rohrverbindung wenigstens ein flüssigkeitsleitender Kanal zu dem Quellprofil (9) führt.

20. Dichtungsanordnung nach Anspruch 16 oder 17, **dadurch gekennzeichnet, dass** aus dem Fugenspalt (4, 6) und/oder aus dem Inneren (I) der Rohrverbindung mittels wenigstens eines in das Muffenende eingebetteten, wasserleitenden Faservlieses oder Fasergewebes wenigstens eine Zuleitung zu dem Quellprofil (9) führt.
